# DEMANDE DE BREVET EUROPEEN

(11) **EP 2 293 162 A1**
(43) Date de publication de la demande: **09.03.2011**
(21) Numéro de dépôt: 10173636.1
(22) Date de dépôt: 20.08.2010
(51) Int. Cl.: G05B 19/042

(54) **Module de commande pour grue de manutention sur poids lourd**

(30) Priorité: 04.09.2009 FR 0904199
(71) Demandeur: Carrosserie Vincent et Fils, 26800 Etoile sur Rhône (FR)
(72) Inventeur: Vincent, Mathias, 26120, Upie (FR); Crionay, Hubert, 07130, Soyons (FR); Romulus, Alexandre, 26240, Upie (FR)
(74) Mandataire: Guérin, Jean-Philippe

(57) **Abrégé**

L'invention concerne un module de commande d'une grue de manutention montée sur un poids lourd, comprenant :
-une première interface (61) adaptée pour alimenter électriquement une grue de manutention ;
-une deuxième interface (62) adaptée pour communiquer avec un circuit de commande du poids lourd ;
-un calculateur (68) connecté aux première et deuxième interfaces, n'alimentant la grue que si un signal d'activation de la prise de mouvement du poids lourd est reçu au préalable sur la deuxième interface ;
-un premier câblage électrique (71) d'une longueur prédéfinie présentant une extrémité connectée à la première interface et une extrémité libre;
-un second câblage électrique (72) d'une longueur prédéfinie présentant une extrémité connectée à la deuxième interface et une extrémité libre.

## Description

L'invention concerne les véhicules poids lourds, et en particulier les poids lourds munis de grues hydrauliques.

Les véhicules poids lourds se présentent sous la forme d'un châssis incluant des trains roulants et une cabine. Les poids lourds se présentent soit sous la forme d'un porteur présentant un volume de chargement solidaire du châssis, soit sous la forme d'un tracteur présentant un volume de chargement sous forme de semi-remorque articulé au châssis.

Usuellement, le châssis du poids lourd est fabriqué par un constructeur selon des standards bien définis. En fonction des souhaits du client final, un carrossier équipe spécifiquement chaque châssis avec un volume de chargement ou un équipement hydraulique (par exemple une grue hydraulique). De nombreux poids lourds sont ainsi équipés de grues de manutention hydrauliques télescopiques. Le carrossier assemble un module de commande sur le châssis, et le raccorde d'une part à l'intérieur de la cabine et d'autre part à la grue hydraulique. Le module de commande est soit fixé sur la face arrière de la cabine, soit en porte à faux à l'arrière du dernier essieu du poids lourd, selon la position de la grue. Le module de commande permet un échange de commandes et d'informations entre l'équipement hydraulique, le châssis et le chauffeur et/ou l'opérateur. En fonction de signaux d'état fournis par un circuit de commande du poids lourd, le module de commande détermine si l'équipement doit ou non être alimenté électriquement pour assurer la sécurité de l'utilisation de l'équipement. Le module de commande interrompt par exemple l'alimentation électrique de l'équipement hydraulique lorsque le frein de parking n'est pas actionné, lorsque la prise de mouvement entraînant une pompe hydraulique n'est pas activée ou peut bloquer ou limiter le déplacement du véhicule lorsque des stabilisateurs ne sont pas relevés en position transport. Une interface sur la grue hydraulique permet par ailleurs de commander et contrôler certaines fonctions du poids lourd depuis l'extérieur par l'intermédiaire du module de commande.

Les carrossiers procédant au montage de grues hydrauliques sont généralement des concessionnaires indépendants. Pour un même châssis, un même équipement hydraulique et les mêmes fonctionnalités, chaque carrossier fabrique le faisceau électrique entre le module de commande, l'équipement hydraulique et la cabine, fabrique le module de commande (avec un coffret, des relais, des fusibles, ...), selon ses propres spécifications et habitudes. En pratique, cela induit différents inconvénients. D'une part, le temps de mise en service de la grue hydraulique (fabrication, montage) est relativement long et nécessite de définir certains câblages sur mesure. D'autre part, la maintenance du module de commande et de la grue est délicate, puisqu'un concessionnaire devra étudier au préalable le câblage éventuellement réalisé par un autre concessionnaire. Les demandes spécifiques et complexes de certains clients sont parfois difficiles, voir impossibles à réaliser ainsi.

Le document US7102623 décrit un module de commande d'une grue de manutention montée sur un poids lourd. Ce module comprend une première interface adaptée pour alimenter électriquement une grue de manutention et une deuxième interface adaptée pour communiquer avec un circuit de commande du poids lourd. Un calculateur est connecté aux première et deuxième interfaces. Un tel calculateur reste relativement complexe et long à installer sur un poids lourd.

L'invention vise à résoudre un ou plusieurs de ces inconvénients. L'invention porte ainsi sur un module de commande d'une grue de manutention montée sur un poids lourd, comprenant:
- une première interface adaptée pour alimenter électriquement une grue de manutention ;
- une deuxième interface adaptée pour communiquer avec un circuit de commande du poids lourd ;
- un calculateur connecté aux première et deuxième interfaces, n'alimentant la grue que si un signal d'activation de la prise de mouvement du poids lourd est reçu au préalable sur la deuxième interface ;
- un premier câblage électrique d'une longueur prédéfinie présentant une extrémité connectée à la première interface et une extrémité libre ;
- un second câblage électrique d'une longueur prédéfinie présentant une extrémité connectée à la deuxième interface et une extrémité libre.

Selon une variante, l'extrémité libre des premier et deuxième câblages électriques présente une borne de connexion sertie.

Selon encore une variante, le premier et le second câblages sont connectés respectivement aux première et deuxième interfaces de communication par l'intermédiaire de raccords étanches.

Selon une autre variante, le module comprend en outre une garniture déformable munie d'un orifice de passage, un câblage traversant ledit orifice.

Selon encore une autre variante, le module comprend une troisième interface apte à alimenter un équipement à actionneur destiné à être monté sur un châssis du poids lourd, le calculateur étant connecté à la troisième interface et ne fournissant une alimentation électrique sur la troisième interface que si un signal d'activation de la prise de mouvement du poids lourd est reçu au préalable sur la deuxième interface.

Selon encore une variante, le module comprend une quatrième interface de réception de commandes émises par une grue, la quatrième interface étant connectée au calculateur, le calculateur étant apte à transmettre sur la deuxième interface une commande de contrôle du fonctionnement du poids lourd reçue sur la quatrième interface.

Selon une autre variante, le calculateur est apte à transmettre sur la deuxième interface une commande de contrôle du moteur du poids lourd, telle qu'une commande de régime moteur, une commande d'arrêt ou une commande de démarrage du moteur.

Selon encore une autre variante, le module comprend une interface de transmission de signaux d'affichage à un afficheur de cabine, un câblage électrique d'une longueur prédéfinie présentant une extrémité connectée à cette interface et une extrémité libre, le calculateur étant apte à traiter des signaux d'état de la grue reçus sur la quatrième interface pour générer des signaux d'affichage appliqués sur cette interface de transmission.

Selon encore une variante, le calculateur est apte à transmettre sur la quatrième interface une commande de contrôle du fonctionnement de la grue ou un signal d'état du poids lourd reçu sur la deuxième interface.

L'invention porte également sur un procédé de montage d'un module de commande d'une grue de manutention sur un poids lourd, comprenant le déballage d'un module de commande tel que décrit ci-dessus hors de son conditionnement, et la connexion des extrémités libres des premier et deuxième câblages respectivement à une grue de manutention et à un circuit de commande de poids lourd.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique d'un module de commande selon l'invention ;
- la figure 2 est une vue schématique d'un premier exemple de raccordement du module de commande sur un camion ;
- la figure 3 est une vue schématique d'un deuxième exemple de raccordement du module de commande sur un camion ;
- la figure 4 est une vue de dessus d'une garniture associée à un câblage du module de commande ;
- la figure 5 est une vue en perspective d'un écran d'affichage monté dans la cabine du camion par l'intermédiaire de la garniture de la figure 4 ;
- la figure 6 est une vue de côté d'un boîtier de logement du module de commande ;
- la figure 7 est une vue en coupe de côté d'un support de fixation du boîtier de logement du module de commande;
- la figure 8 est une vue de face du boîtier de logement monté dans le support de fixation ;
- la figure 9 une vue en coupe de côté du boîtier de logement partiellement extrait du support de fixation.

L'invention propose un module de commande d'une grue de manutention montée sur un poids lourd. Le module de commande comprend une première interface pour alimenter électriquement une grue de manutention. Une deuxième interface est destinée à communiquer avec un circuit de commande du poids lourd. Un calculateur connecté à ces interfaces fournit une sécurité du fonctionnement lié à la grue : le calculateur n'alimente la grue que si un signal d'activation de la prise de mouvement, par exemple, du poids lourd est reçu au préalable sur la deuxième interface. Des câblages électriques de longueur prédéfinie sont connectés par leur première extrémité à une interface de communication respective. Leur autre extrémité est libre.

Un tel module de commande peut être fourni de façon standard avec ses câblages de longueurs prédéfinies. En fournissant un tel module prêt au montage sur un poids lourd à différents concessionnaires, l'opération de montage est nettement facilitée et les montages réalisés par les concessionnaires sont beaucoup plus homogènes, facilitant ainsi la maintenance de l'ensemble poids lourd - grue.

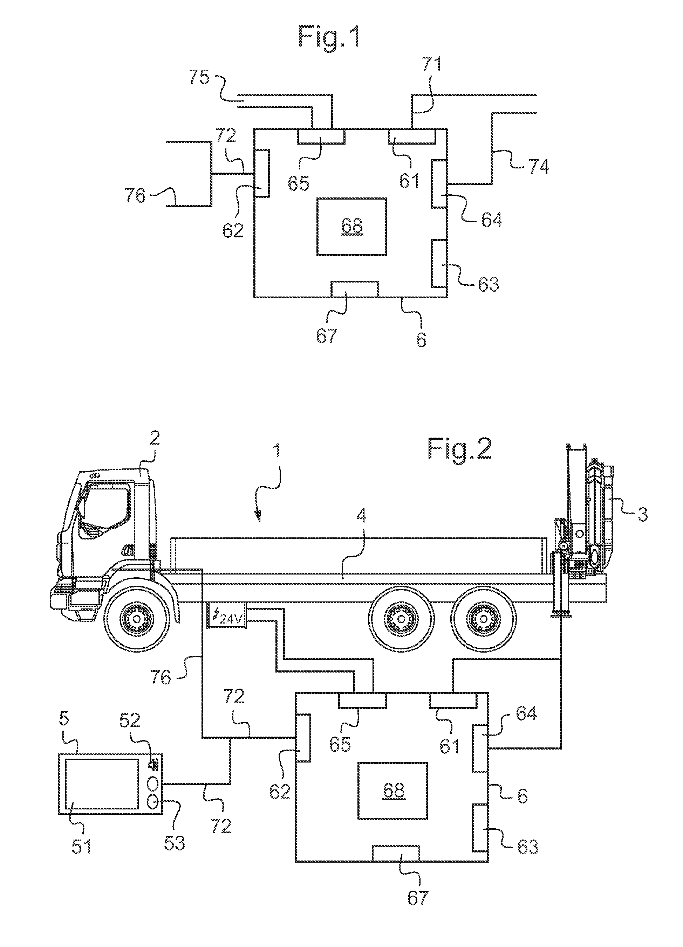

La figure 1 représente de façon schématique un module de commande 6 selon un mode de réalisation de l'invention. Le module de commande 6 comprend de façon connue en soi un calculateur 68 apte à alimenter électriquement une grue de manutention seulement lorsque certains critères de sécurité sont remplis. Le calculateur 68 est avantageusement apte à gérer la restitution d'informations concernant l'état de fonctionnement de la grue, associée ou non à un ou plusieurs équipements supplémentaire(s), par l'intermédiaire d'un afficheur dans la cabine. Le calculateur 68 est avantageusement apte à transmettre des commandes provenant de la grue afin d'influer sur le fonctionnement du moteur du poids lourd. Le calculateur 68 peut être programmable ou paramétrable, de façon à pouvoir modifier son fonctionnement pour assurer la sécurité et éventuellement la commande d'équipements d'actionnement additionnels. Les paramètres de la grue 3, tels que son gabarit pourront notamment être renseignés par programmation du calculateur 68, par l'intermédiaire de l'afficheur.

Le module de commande 6 comprend un certain nombre d'interfaces de communication et d'alimentation électrique. Une interface 64 permet d'échanger des signaux de commande ou d'état avec la grue 3. L'interface 64 est raccordée à un câblage 74 pour une connexion à la grue 3. L'interface 64 permet notamment la réception d'un certains nombre de signaux d'état provenant de la grue 3, tels que la position de la grue, l'indication du repliement de la grue ou l'état de déploiement de stabilisateurs du châssis 4. L'interface 64 permet également la réception de commandes destinées au poids lourd 1 et en particulier à la gestion du fonctionnement de son moteur, telles que des commandes d'arrêt ou de démarrage du moteur ou de modification de son régime, une interdiction ou une limitation du déplacement du véhicule pour une grue non repliée ou hors gabarit. L'interface 64 permet également de transmettre des commandes à la grue 3, telles que des commandes d'activation d'une sonnerie d'alerte. Par conséquent, l'interface 64 est avantageusement une interface d'entrée/sortie. Une interface de sortie 61 est raccordée à un câblage 71 pour une connexion à la grue. Cette interface 61 est destinée à fournir une alimentation électrique de la grue et d'autres accessoires associés à la grue 3. Cette interface 61 peut présenter une protection par fusibles, en fonction des niveaux de puissance des différents composants de la grue. L'interface 61 peut notamment être connectée à différents composants de la grue 3, tels qu'un phare de travail, un capteur de position, un refroidisseur ou une électronique de commande de la grue 3.

Une interface 65 est raccordée à un câblage 75 pour recevoir une alimentation électrique en provenance d'une source de courant continu de forte puissance telle qu'une batterie 24V montée sur le châssis 4 du poids lourd 1.

Une interface 62 est raccordée à un câblage 72, notamment pour communiquer avec un circuit de commande logé dans la cabine 2 du poids lourd 1. En l'occurrence, l'interface 62 peut être une interface destinée à être connectée à un réseau CAN du véhicule par l'intermédiaire du câblage 72. L'interface 62 peut être utilisée pour transmettre des commandes au circuit de commande du poids lourd 1, par exemple les commandes d'arrêt, de limitation ou de variation du régime du moteur, ou une commande de limitation de vitesse. L'interface 62 peut également être utilisée pour recevoir des signaux d'état transmis par le circuit de commande du poids lourd 1. Ces signaux comprennent notamment l'état d'activation d'une prise de mouvement (également désignée sous l'acronyme PTO) du châssis 4, l'activation du frein de parking, un indicateur de fonctionnement du moteur ou tout autre signal d'état utile pour assurer la sécurité d'utilisation, le fonctionnel ou des fonctions de confort de la grue 3 et du véhicule. En effet, l'interface 62 permet éventuellement de communiquer avec le circuit de commande du poids lourd pour disposer d'un grand nombre de signaux d'état et ainsi pouvoir proposer des options à l'utilisateur. Le calculateur 68 pourra par exemple recevoir un signal de niveau de carburant bas et ainsi envoyer une commande d'alerte sonore à la grue 3 afin d'alerter l'utilisateur. L'interface 62 permet également de fournir des signaux d'affichage à un afficheur 5 par l'intermédiaire du câblage électrique 72. L'interface 62 est de type CAN dans l'exemple illustré. L'afficheur 5 peut constituer une interface entre le réseau CAN et des entrées et sorties filaires qui seront ou non connectées en cabine.

Une interface 63 forme une alimentation électrique pour d'autres équipements additionnels à monter sur le châssis du poids lourd 1. L'alimentation sur l'interface 63 peut également être conditionnée par le calculateur 68 en fonction de conditions préalables de sécurité ou de fonctions logiques non respectées lors de l'utilisation du poids lourd 1. On peut notamment connecter des équipements à actionneurs, tels qu'une benne hydraulique, une barre anti-encastrement à actionnement hydraulique.

Une interface 67 permet de raccorder le calculateur 68 à un réseau de communication répondant au standard CAN open, par l'intermédiaire d'un câblage non référencé. L'interface 63 permet par exemple d'échanger des signaux de commande et d'état avec les équipements additionnels. Une interface 63 de type CAN open permet éventuellement de communiquer avec le circuit de commande du poids lourd pour disposer d'un grand nombre de signaux d'état et ainsi pouvoir proposer des options à l'utilisateur. Pour cela, un câblage adéquat sera connecté à l'interface 67.

La figure 2 représente plus précisément l'intégration du module de commande 6 dans un poids lourd 1. Le poids lourd 1 illustré est de type porteur, c'est-à-dire que le châssis 4, la zone de chargement et la cabine 2 sont formés d'un seul tenant. Une grue de manutention 3 hydraulique est montée à l'arrière du châssis 4. Cependant, la grue de manutention 3 peut tout aussi bien être fixée en tout autre endroit approprié du châssis 4, par exemple à proximité de la cabine 2. La pression hydraulique est fournie à la grue 3 par une pompe hydraulique entraînée par une prise de mouvement du châssis 4. Le module de commande 6 est fixé au poids lourd 1 de façon connue en soi, sur le châssis 4 à proximité de la grue de manutention 3 ou directement sur la grue 3. Un afficheur 5 est connecté à l'interface 62 et disposé à l'intérieur de la cabine 2. L'afficheur 5 est avantageusement muni d'un écran 51, de voyants lumineux 53 et d'un avertisseur sonore 52. L'afficheur 5 est connecté au réseau CAN 62 qui relie le calculateur 68 au châssis. L'afficheur peut afficher les raisons d'une désactivation de la grue 3 d'une interdiction du démarrage ou d'une limitation du déplacement du poids lourd 1. L'afficheur 5 peut également être utilisé durant le carrossage pour choisir les options dont la logique et la connectique est à intégrer, le type châssis, ainsi que pour diagnostiquer l'état des entrées/sorties du calculateur et de ses propres entrées/sorties. Dans cet exemple, le calculateur 68 communique directement avec le circuit de commande du poids lourd par l'intermédiaire du réseau CAN par l'intermédiaire du câblage 72 et de sa dérivation 76.

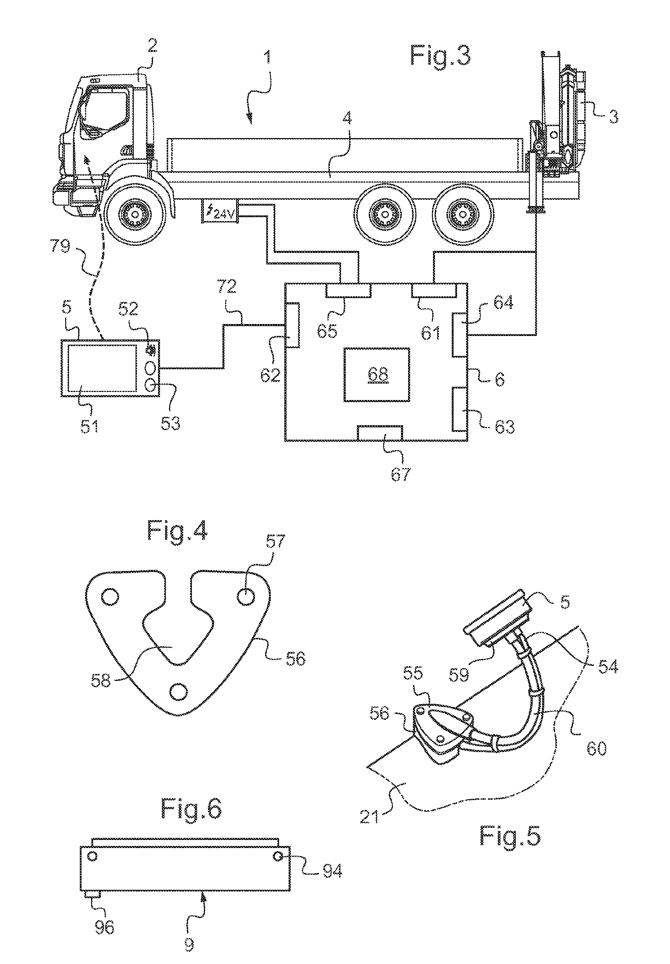

La figure 3 représente un autre type d'intégration d'un module de commande 6 dans un poids lourd 1. Le poids lourd 1 illustré est identique à celui de la figure 2. Dans cet exemple, l'afficheur 5 est connecté à l'interface CAN 62 du module de commande 6. Les commandes et les signaux d'état échangés entre le poids lourd 1 et le module de commande 6 transitent par l'intermédiaire de l'afficheur 5. L'afficheur 5 est ainsi connecté par une connexion filaire 79 au châssis du poids lourd 1.

On peut avoir un mélange des 2 câblages : certaines informations transitent via le réseau CAN et d'autres en filaire.

La figure 4 représente en vue de dessus une garniture 56 avantageusement accolée au câblage électrique destiné à être connecté à l'afficheur 5. Une telle garniture 56 présente un orifice médian 58 permettant le passage du câblage 72 connecté à l'afficheur 5. La garniture 56 présente par ailleurs des alésages 57 pour le passage de moyens de fixation tels que des vis. La garniture 56 est destinée à s'interposer entre une embase 55 d'un afficheur 5 et un élément d'habillage 21 de la cabine 2, tel qu'une planche de bord. La garniture 56 permet d'une part de fixer une embase 55 présentant une face plane sur un élément d'habillage 21 présentant une forme courbe. La garniture 56 est à cet effet déformable, afin de pouvoir épouser le galbe d'une planche de bord. La garniture 56 pourra par exemple être réalisée en élastomère ou en mousse polyuréthane. La garniture 56 permet d'autre part de masquer le passage du câblage électrique 72 traversant l'élément d'habillage 21 vers l'afficheur 5. La garniture 56 pourra présenter une face plate venant en contact avec la face plate de l'embase 55. L'embase 55 et la garniture 56 pourront être conformées. Comme illustré à la figure 5, une gaine 54 s'étend entre l'embase 55 et une platine 59 de fixation de l'afficheur 5. La platine 59, l'embase 55 et le tuyau semi-flexible 60 constituent un support afficheur. La gaine 54 protège le câblage électrique 72 qui la traverse.

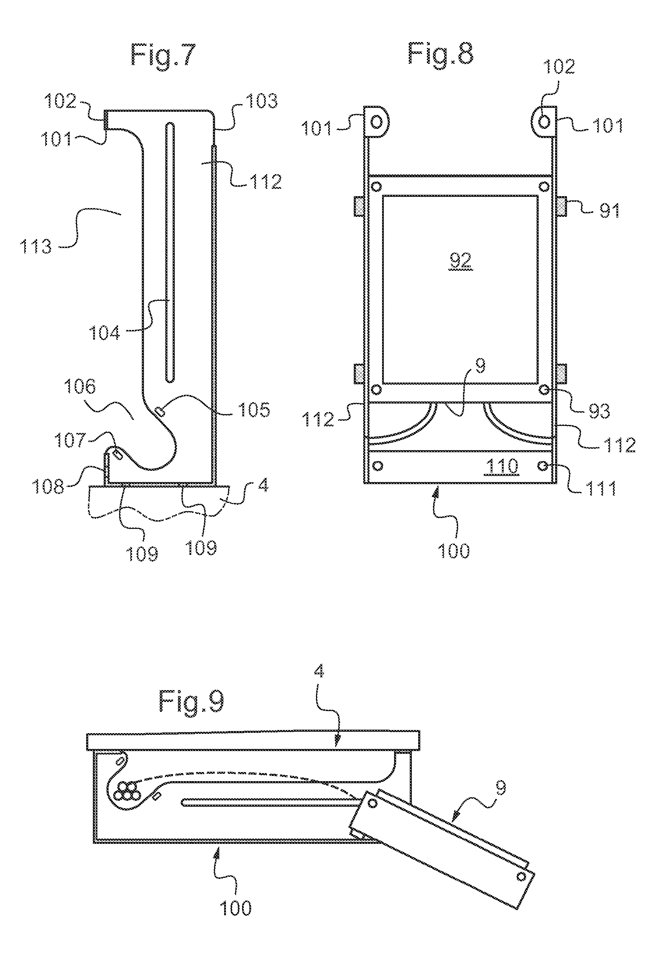

La figure 6 est une vue de côté d'un boîtier de logement 9 destiné à loger le calculateur 68 ainsi que les différentes interfaces de communication du module de commande 6. La figure 8 illustre le boîtier 9 monté dans un support 100. Le boîtier 9 présente une ouverture supérieure 92 permettant un accès aux différents composants qui sont logés à l'intérieur. Le boîtier 9 comprend par ailleurs des alésages filetés 94 ménagés sur les faces latérales. Les alésages filetés 94 permettent le vissage de vis moletées 91 pour la fixation du boîtier 9 sur le support 100. Des alésages filetés 93 sont ménagés sur la face supérieure du boîtier 9, à la périphérie de l'ouverture 92. Les alésages filetés permettent de fixer un couvercle sur le boîtier 9 pour fermer l'ouverture 92 et rendre l'intérieur du boîtier 9 étanche. Une ou deux pastilles 96 brise-jet (à chicanes, ou en matériau commercialisé sous la référence goretex afin de permettre une entrée d'air et une sortie d'eau mais pas une entrée d'eau) sont mises en place pour éviter la condensation.

La figure 7 est une vue en coupe de côté du support 100 fixé verticalement selon un exemple de montage sur le châssis 4 ou sur la grue 3. Le support 100 comporte deux parois latérales 112 entre lesquelles se fixe le boîtier 9. Des rainures 104 sont ménagées dans les parois latérales 112. Les rainures 104 sont traversées par les tiges des vis 91 pour permettre son immobilisation par rapport au support 100. Le support 100 a un fond sur lequel vient reposer le boîtier 9. Le support 100 présente des languettes 101 au niveau de sa partie supérieure. Des trous 102 sont ménagés dans les languettes 101. Les trous 102 servent à la fixation par boulon. Le support 100 présente un bandeau 110 au niveau de sa partie supérieure, sensiblement au même niveau que les languettes 101. Des trous 111 sont ménagés dans le bandeau 110. Le support 100 présente également une ouverture 103 ménagée au niveau d'une extrémité de sa face inférieure et dont la fonction sera détaillée ultérieurement. Des alésages 109 sont ménagés dans la face avant pour permettre la fixation du support 100 au châssis 4. Une découpe 106 est ménagée au niveau d'une extrémité axiale de chaque paroi latérale 112. La découpe 106 débouche sur une découpe longitudinale 113 s'étendant sensiblement sur toute la longueur de la structure 100. Les découpes 106 permettent des passages de chaque côté des câblages électriques connectés au boîtier et 9. Des ouvertures 105 et 107 sont ménagées de part et d'autre des découpes 106. Les alésages 105 et 107 permettent le passage de colliers de fixation pour maintenir les câblages électriques en position dans les découpes 106 pour un tel montage vertical.

La figure 9 représente la structure 100 fixée horizontalement au châssis 4 par l'intermédiaire des trous 102 et 111. Dans ce mode de réalisation, l'accès au boîtier 9 se fait par extraction partielle du boîtier 9 de la structure 100. On retire par exemple les vis moletées 91 de la partie avant, puis on fait coulisser le boîtier 9 par rapport à la structure 100. Le fond du support 100 permet de guider le coulissement du boîtier. Les vis moletées 91 de la partie arrière assurent la butée pour le coulissement, ainsi qu'un axe de pivotement lorsque la butée est atteinte. Lorsque la partie arrière du boîtier 9 atteint l'ouverture 103, le boîtier 9 est en position pivotée en fin de course et en appui sur le fond du support 100. Les câblages peuvent être déplacés dans les découpes 113 lors d'un coulissement du boîtier 9.

Avant son montage sur châssis, le module de commande 6 se présente sous la forme d'un boîtier de logement 9 logeant le calculateur 68 et auquel les différents câblages sont raccordés. Le module de commande 6 est livré avec des câblages raccordés au préalable aux interfaces et présentant une extrémité libre. Le concessionnaire n'a alors qu'à fixer le module de commande au camion poids lourd 1, puis à connecter l'extrémité libre des câblages aux emplacements appropriés, à savoir la grue, afficheur, la batterie, le réseau de communication du poids lourd ou tout autre équipement à contrôler. L'extrémité libre des câblages peut présenter des bornes de connexion au format approprié serties au préalable, pour faciliter et standardiser leur raccordement électrique par le réseau concessionnaire.

On peut envisager que deux séries de modules de commande soient distribuées. Ces deux séries peuvent se distinguer par les longueurs respectives prédéfinies de leurs câblages électriques. En effet, pour une grue de manutention 3 montée à l'arrière de la cabine 2, les câblages 75 et 76 seront plus courts que pour une grue 3 montée à l'arrière du châssis.

Avec des câblages de longueur prédéfinie, le concessionnaire pourra tout de même adapter le module de commande à différentes configurations de poids lourd. Ainsi, la longueur des câblages sera suffisante pour envisager les différentes implantations possibles sur un poids lourd. Lorsque la longueur prédéfinie d'un câblage s'avère en pratique supérieure à la longueur nécessaire pour se raccorder en cabine ou aux batteries, le concessionnaire pourra réaliser des enroulages de ce câblage en excès afin de s'adapter à la configuration du poids lourd.

Le module de commande 6 étant livré avec des interfaces de communication préalablement connectées au câblage. Pour des raccords externes au boîtier, cette connexion est avantageusement réalisée au moyen de raccords étanches, qui facilitent la maintenance du module de commande et sont montés de façon plus fiable en usine. Le module de commande 6 pourra être livré sous forme de kit incluant également l'écran d'affichage 5.

## Revendications

1. Module de commande (6) d'une grue de manutention (3) montée sur un poids lourd (1), **caractérisé en ce qu'**il comprend :
- une première interface (61) adaptée pour alimenter électriquement une grue de manutention (3) ;
- une deuxième interface (62) adaptée pour communiquer avec un circuit de commande du poids lourd ;
- un calculateur (68) connecté aux première et deuxième interfaces, n'alimentant la grue que si un signal d'activation de la prise de mouvement du poids lourd est reçu au préalable sur la deuxième interface ;
- un premier câblage électrique (71) d'une longueur prédéfinie présentant une extrémité connectée à la première interface et une extrémité libre ;
- un second câblage électrique (72) d'une longueur prédéfinie présentant une extrémité connectée à la deuxième interface et une extrémité libre.

2. Module de commande selon la revendication 1, dans lequel l'extrémité libre des premier et deuxième câblages électriques (71,72) présente une borne de connexion sertie. (71,72).

3. Module de commande (6) selon la revendication 1 ou 2, dans lequel le premier et le second câblages (71,72) sont connectés respectivement aux première et deuxième interfaces de communication (61, 62) par l'intermédiaire de raccords étanches.

4. Module de commande selon l'une quelconque des revendications précédentes, comprenant en outre une garniture déformable (56) munie d'un orifice de passage (58), le second câblage (72) traversant ledit orifice.

5. Module de commande (6) selon l'une quelconque des revendications précédentes, comprenant une troisième interface (63) apte à alimenter un équipement à actionneur destiné à être monté sur un châssis du poids lourd, le calculateur (68) étant connecté à la troisième interface et ne fournissant une alimentation électrique sur la troisième interface que si un signal d'activation de la prise de mouvement du poids lourd est reçu au préalable sur la deuxième interface.

6. Module de commande (6) selon l'une quelconque des revendications précédentes, comprenant une quatrième interface (64) de réception de commandes émises par une grue, la quatrième interface étant connectée au calculateur (68), le calculateur étant apte à transmettre sur la deuxième interface une commande de contrôle du fonctionnement du poids lourd reçue sur la quatrième interface.

7. Module de commande (6) selon la revendication 6, dans lequel le calculateur est apte à transmettre sur la deuxième interface une commande de contrôle du moteur du poids lourd, telle qu'une commande de régime moteur, une commande d'arrêt ou une commande de démarrage du moteur.

8. Module de commande (6) selon la revendication 7, comprenant une interface (62) de transmission de signaux d'affichage à un afficheur de cabine (5), un câblage électrique d'une longueur prédéfinie présentant une extrémité connectée à cette interface et une extrémité libre, le calculateur (68) étant apte à traiter des signaux d'état de la grue reçus sur la quatrième interface pour générer des signaux d'affichage appliqués sur cette interface de transmission.

9. Module de commande (6) selon l'une quelconque des revendications 6 à 8, dans lequel le calculateur est apte à transmettre sur la quatrième interface une commande de contrôle du fonctionnement de la grue ou un signal d'état du poids lourd reçu sur la deuxième interface.

10. Procédé de montage d'un module de commande d'une grue de manutention sur un poids lourd, comprenant le déballage d'un module de commande selon l'une quelconque des revendications précédentes, et la connexion des extrémités libres des premier et deuxième câblages (71, 72) respectivement à une grue de manutention (3) et à un circuit de commande de poids lourd.
